(19) Europäisches Patentamt
European Patent Office
Office européen des brevets

(11) **EP 4 369 260 A1**

(12) **EUROPEAN PATENT APPLICATION**

(43) Date of publication:
**15.05.2024 Bulletin 2024/20**

(21) Application number: **22206727.4**

(22) Date of filing: **10.11.2022**

(51) International Patent Classification (IPC):
**G06N 10/20** $^{(2022.01)}$    **G06N 10/40** $^{(2022.01)}$
**G06N 10/60** $^{(2022.01)}$    **G06N 3/09** $^{(2023.01)}$

(52) Cooperative Patent Classification (CPC):
**G06N 10/20; G06N 3/09; G06N 10/40; G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Terra Quantum AG
9000 St. Gallen (CH)**

(72) Inventors:
• **Kordzanganeh, Mohammad
9000 St. Gallen (CH)**

• **Sekatski, Pavel
9000 St. Gallen (CH)**
• **Fedichkin, Leonid
9000 St. Gallen (CH)**
• **Melnikov, Alexey
9000 St. Gallen (CH)**

(74) Representative: **Kretschmann, Dennis et al
Boehmert & Boehmert
Anwaltspartnerschaft mbB
Pettenkoferstrasse 22
80336 München (DE)**

(54) **METHOD AND SYSTEM FOR ENCODING A DATASET IN A QUANTUM CIRCUIT FOR QUANTUM MACHINE LEARNING**

(57) The present disclosure refers to a method for encoding a dataset in a quantum circuit for quantum machine learning in a system. The system comprises a quantum circuit (11a) comprising a plurality of encoding quantum gates and a plurality of variational quantum gates. The method comprises: providing a dataset comprising a plurality of input features; for each input feature of the plurality of input features, applying the plurality of encoding quantum gates on one quantum bit (qubit) or a plurality of qubits, wherein each of the plurality of encoding quantum gates rotates the one qubit or the plurality of qubits by a rotation angle which is proportional to the input feature and one of a plurality of scaling factors, each of the plurality of encoding quantum gates is assigned a different one of the plurality of scaling factors, and the plurality of scaling factors comprises powers of two; applying the plurality of variational quantum gates on the qubit or the plurality of qubits; determining a plurality of measurement values for the qubit or the plurality of qubits; adjusting the quantum circuit (11a) by adjusting the plurality of variational quantum gates using the plurality of measurement values; and determining output data for the dataset from the quantum circuit (11a).

Fig. 4

EP 4 369 260 A1

**Description**

Technical Field

The present disclosure refers to a method and a system for encoding a dataset in a quantum circuit for quantum machine learning.

Background

The successes of quantum computing in the past decade have laid the foundations for quantum machine learning (QML), where parametrized quantum circuits (PQC) are used as part of machine learning procedures. Quantum neural networks (QNN) employed therein may have higher trainability, capacity, and generalizability than their classical counterparts (cf. A. Abbas et al., The power of quantum neural networks (2020)). Thus, advantages of quantum computing may be transferred to the field of machine learning, making machine learning potentially scalable beyond classical bounds. Quantum neural networks generally require a quantum encoding procedure, wherein classical (training) data is mapped to encoding quantum gates and variational quantum gates can be adapted during training.

Different architectures for quantum neural networks, in which (classical) input data are encoded in certain quantum gates and further quantum gates are trained via machine learning are known (see M. Schuld et al., Phys. Rev. A, 103(3):032430 (2021) or A. Perez-Salinas et al., Quantum, 4:226 (2020)). In S. Lloyd et al., arXiv:2001.03622 (2020), a quantum encoding method for quantum machine learning including a hybrid quantum classical neural network is disclosed.

Efficient encoding of the input data may facilitate the training procedure. In Jerbi et al., arXiv:2103.05577 (2021), a parametrized quantum circuit for policy optimization in reinforcement learning is disclosed. State values may be scaled using trainable, floating-point variables. In Shin et al., arXiv:2206.12105 (2022), an exponentially growing encoding procedure for input data is disclosed.

Summary

It is an object of the present disclosure to provide improved techniques for encoding data in a quantum circuit, in particular in order to enhance training of parametrized quantum circuits in quantum machine learning.

For solving the problem, a method and a system for encoding a dataset in a quantum circuit for quantum machine learning are provided according to the independent claims. Further embodiments are disclosed in dependent claims.

According to one aspect, a method for encoding a dataset in a quantum circuit for quantum machine learning in a system is provided. The system comprises a quantum circuit comprising a plurality of encoding quantum gates and a plurality of variational quantum gates. The method comprises: providing a dataset comprising a plurality of input features; for each input feature of the plurality of input features, applying the plurality of encoding quantum gates on one quantum bit (qubit) or a plurality of qubits, wherein each of the plurality of encoding quantum gates rotates the one qubit or the plurality of qubits by a rotation angle which is proportional to the input feature and one of a plurality of scaling factors, each of the plurality of encoding quantum gates is assigned a different one of the plurality of scaling factors, and the plurality of scaling factors comprises powers of two; applying the plurality of variational quantum gates on the qubit or the plurality of qubits; determining a plurality of measurement values for the qubit or the plurality of qubits; adjusting the quantum circuit by adjusting the plurality of variational quantum gates using the plurality of measurement values; and determining output data for the dataset from the quantum circuit.

According to another aspect, a system for encoding a dataset in a quantum circuit for quantum machine learning is provided, the system comprising a quantum circuit comprising a plurality of encoding quantum gates and a plurality of variational quantum gates. The system is configured to: provide a dataset comprising a plurality of input features; for each input feature of the plurality of input features, apply the plurality of encoding quantum gates on one qubit or a plurality of qubits, wherein each of the plurality of encoding quantum gates rotates the one qubit or the plurality of qubits by a rotation angle which is proportional to the input feature and one of a plurality of scaling factors, each of the plurality of encoding quantum gates is assigned a different one of the plurality of scaling factors, and the plurality of scaling factors comprises powers of two; apply the plurality of variational quantum gates on the qubit or the plurality of qubits; determine a plurality of measurement values for the qubit or the plurality of qubits; adjust the quantum circuit by adjusting the plurality of variational quantum gates using the plurality of measurement values; and determine output data for the dataset from the quantum circuit.

As a result, an improved manner of encoding of data in a quantum circuit as part of quantum machine learning may be provided. With the provided scaling factors for embedding input features in angles of a quantum circuit, a larger part of the Hilbert space underlying the quantum circuit can be employed for determining output data for the input dataset, such as a basis decomposition. Spanning the full Hilbert space may be important for a-priori problems, where the best model for the dataset may lie somewhere as a point in Hilbert space, but no prior knowledge of how to parametrize the quantum circuit to reach this point may be available.

By rotating qubits using the input features and the scaling factors, i.e., encoding the input features in the quantum circuit according to the invention, for example the number of possible basis functions that can be represented by the quantum circuit may scale exponentially (instead of linearly) with the number of qubits or number of encoding repetitions. By the proposed method, large unitary generators may be decomposed into local Pauli-Z-rotations. Thus, the expressivity of the quantum circuit may be increased without requiring additional qubits or encoding repetitions. The increased expressivity may result from eliminating encoding degeneracies of the quantum kernel, making efficient use of the available Hilbert space by assigning a unique wave-vector to each of its dimensions.

Each of the plurality input features may a real number. Each of the plurality of scaling factors may be a natural number.

Within the context of the present disclosure, the term *"real number"* may also comprise finite-precision approximations of real numbers, such as floating-point numbers or arbitrary precision numbers.

The dataset may further comprise a plurality of labels. Each of the labels may be a function value of one of the plurality of features. In other words, the dataset may comprise or consist of pairs of input features and labels, wherein preferably each of the labels is associated with one of the input features.

Within the context of the present disclosure, *powers of two* consist of natural numbers and, in particular, correspond to the numbers $\{2^k\}$ with natural numbers $k \geq 0$.

The plurality of scaling factors may additionally comprise a power of two incremented by one, i.e., the $2^{n-1} + 1$ with natural number $n \geq 2$.

In particular, the plurality of scaling factors may comprise or consist of the set $\{2^0, 2^1, \ldots 2^{n-2}, 2^{n-1} + 1\}$ with natural number $n > 2$, in particular with $n > 3$, $n > 4$, or $n > 5$. Each of the scaling factors may be unique for each of the encoding quantum gates. In other words, each of the encoding quantum gates may be assigned a unique scaling factor. In particular, the number of scaling factors may be equal to the number of encoding quantum gates.

For each input feature of the plurality of input features, the plurality of encoding quantum gates may comprise a corresponding (separate) subset of encoding quantum gates. In other words, each input feature may be assigned a subset of encoding quantum gates of the plurality of quantum gates. For example, a first input feature may be assigned a first subset of encoding quantum gates and a second input feature may be assigned a second subsect of encoding quantum gates (different from the first subset of encoding quantum gates). In general, a $j^{th}$ input feature may be assigned a $j^{th}$ subset of encoding quantum gates, wherein $j$ is greater than 1 and not greater than the number of input features of the dataset.

Each rotation angle may comprise a product of one of the input features with one of the scaling factors.

For each input feature, each of the plurality of encoding quantum gates may rotate the one qubit or the plurality of qubits by a rotation angle of a set of rotation angles associated with the input feature. In particular, the set of rotation angles associated with the input feature x may comprise or consist of the set $\{2^0 x, 2^1 x, \ldots 2^{n-2} x, (2^{n-1} + 1) x\}$ with natural number $n > 2$.

The number of encoding quantum gates of the plurality of encoding quantum gates may be an (integer) multiple of the number of input features (of the plurality of input features of the dataset).

The plurality of encoding quantum gates may be applied in parallel or sequentially (serially).

In particular, the plurality of encoding quantum gates may be applied in parallel on the plurality of qubits. In particular, each of the plurality of encoding quantum gates may be applied to a different one of the plurality of qubits.

For each qubit of the plurality of qubits, a (separate) set of measurement values may be determined.

The subsets of encoding quantum gates assigned to the (different) input features of the dataset may be arranged in parallel. For each input feature of the plurality of input features, the plurality of qubits may comprise a corresponding (separate) subset of qubits. For each input feature of the plurality of input features, the corresponding subset of encoding quantum gates may be applied to the corresponding subset of qubits.

The plurality of encoding quantum gates may be applied sequentially (serially) on the one (single) qubit.

The subsets of encoding quantum gates assigned to the (different) input features of the dataset may be arranged serially. In particular, a $(j + 1)^{th}$ subset of encoding quantum gates (assigned to a $(j + 1)^{th}$ input feature) may be applied on the one qubit subsequent to applying a $j^{th}$ subset of encoding quantum gates (assigned to a $j^{th}$ input feature), wherein $j$ is greater than 1 and less than the number of input features of the dataset.

The number of encoding quantum gates may be greater than 2, 3, 4, or 5. The number of encoding quantum gates may also be greater than 10, 15, 20, or 50.

Between each two of the plurality of encoding quantum gates, at least one of the plurality of variational quantum gates may be applied. In particular, between each two of the plurality of encoding quantum gates, an intermediate variational layer comprising a set of intermediate variational quantum gates may be applied.

Applying the plurality of variational quantum gates may comprise applying an initial variational quantum gate on the one qubit or the plurality of qubits prior to applying the plurality of encoding quantum gates. Applying the plurality of variational quantum gates may also comprise applying a final variational quantum gate subsequent to applying the plurality of encoding quantum gates.

Applying the plurality of variational quantum gates may comprise applying an initial variational layer on the one qubit or the plurality of qubits prior to applying the plurality of encoding quantum gates. The initial variational layer may comprise a set of initial variational quantum gates.

Applying the plurality of variational quantum gates may comprise applying a final variational layer subsequent to applying the plurality of encoding quantum gates. The final variational layer may comprise a set of final variational quantum gates.

The plurality of (initial and/or intermediate and/or final) variational quantum gates may be determined by a plurality of variational parameters. Additionally, the method may further comprise optimizing the variational parameters by iteratively applying the plurality of encoding quantum gates and the plurality of variational quantum gates on the one qubit or the plurality of qubits, determining the plurality of measurement values, and adjusting the quantum circuit until an optimization criterion is reached. The plurality of variational parameter may thus be trainable.

At least one of, preferably each of the variational quantum gates may be determined by at least one of the plurality of variational parameters. In particular, each of the variational quantum gates may be determined by (a unique) one of the plurality of variational parameters.

The plurality of variational parameters may comprise a plurality of variational rotation angles, preferably by which the one qubit or the plurality of qubits are rotatable. In particular, each of the plurality of variational parameters may be a variational rotation angle.

The plurality of (initial and/or intermediate and/or final) variational quantum gates may comprise at least one of a Pauli-X-gate, a Pauli-Y-gate, a Pauli-Z-gate, a Hadamard gate, and a CNOT gate. The CNOT gate may be a 2-qubit CNOT gate.

In particular, the method may comprise determining a loss value from the plurality of measurement values and reference values by applying a loss function. The loss function may, e.g., be a mean squared error loss function. The reference value may be determined from the labels of the dataset. Determining the loss value may for example be carried out in the data processing device.

The optimization criterion may, e.g., comprise the loss value being below a loss value threshold.

The loss value may be determined in a (classical) data processing device. The system may comprise the data processing device. The plurality of measurement values may be received in the data processing device. In particular, the plurality of measurement values may be transmitted from a measurement device, which is configured to provide the plurality of measurement values, to the data processing device. The dataset may be provided in the data processing device. The plurality of input features may be transmitted (from the data processing device) to the quantum circuit. Alternatively, the loss value may be determined in a quantum processing unit, which may preferably comprise the quantum circuit.

The method may further comprise determining a variational parameter gradient from the loss value. In addition, adjusting the plurality of variational quantum gates may comprise adjusting the plurality of variational quantum gates based on the variational parameter gradient.

Determining the variational parameter gradient may for example be carried out in the data processing device. Adjusting the plurality of variational quantum gates based on the variational parameter gradient may comprise transmitting adjustment signals based on (and/or comprising) the variational parameter gradient from the data processing device to the quantum circuit. Alternatively, determining the variational parameter gradient may be carried out in the quantum processing unit.

The variational parameter gradient may be indicative of a change of the loss value for a change of the variational parameters. Other alternatives to determining the variational parameter gradient (and/or gradient descent) for adjusting the variational quantum gates may be provided.

The variational parameter gradient may, e.g., be determined by a parameter-shift rule and/or an adjoint method.

The method may comprise determining, preferably from the quantum circuit, output data for approximating the dataset. The output data may comprise a basis decomposition for the dataset and/or an approximation function for the dataset.

Determining the output data for the dataset may in particular comprise determining, preferably from the quantum circuit, a basis decomposition for the dataset. The basis decomposition may be determined to approximate the labels of the dataset for the corresponding features of the dataset. In other words, the method may comprise solving a (non-linear) regression problem for the dataset (using the basis decomposition).

The basis decomposition may for example be a (truncated) Fourier decomposition. The method may therefore provide a Fourier estimator. In particular, a trigonometric series may be fitted to any given function. The greater the number of terms in the Fourier decomposition, the better the estimate for the input dataset may be. Alternative basis decompositions to the above Fourier decomposition may be provided using the proposed encoding.

Since quantum gates may be represented by elements of compact groups, Fourier analysis may be beneficial for analyzing quantum neural networks. The Fourier estimator may initially infer coarse correlations in the supplied data. Additionally, by increasing the number of Fourier terms in the Fourier decomposition, more granular properties of the dataset may be determined.

The one qubit or the plurality of qubit may be provided by energy levels of trapped ions. In particular, the one qubit or the plurality of qubit may be provided by hyperfine states and/or vibrational modes of the trapped ions. Alternative embodiments for providing the one qubit or the plurality of qubit such as single photon locations between two modes, photon polarizations, or atomic nucleus spins may also be provided.

The aforementioned embodiments related to the method for quantum key distribution can be provided correspondingly for the system for quantum key distribution.

Description of embodiments

In the following, embodiments, by way of example, are described with reference to the Figures, in which:

Fig. 1     shows a graphical representation of a system for encoding a dataset in a quantum circuit for quantum machine learning,

Fig. 2     shows a graphical representation of training a quantum neural network,

Fig. 3     shows a graphical representation for encoding a dataset in a quantum circuit in a parallel arrangement of encoding quantum gates,

Fig. 4a    shows a graphical representation of a quantum circuit in a parallel arrangement of encoding quantum gates,

Fig. 4b    shows a graphical representation of another quantum circuit in a parallel arrangement of encoding quantum gates without scaling factors,

Fig. 5     shows a graphical representation for encoding a dataset in a quantum circuit in a sequential arrangement of encoding quantum gates,

Fig. 6a    shows a graphical representation of a quantum circuit in a sequential arrangement of encoding quantum gates,

Fig. 6b    shows a graphical representation of another quantum circuit in a sequential arrangement of encoding quantum gates without scaling factors,

Fig. 7a    shows a graphical representation of a variational layer in a parallel arrangement for two qubits,

Fig. 7b    shows a graphical representation of a variational layer in a parallel arrangement for three qubits,

Fig. 7c    shows a graphical representation of a variational layer in a sequential arrangement,

Fig. 8     shows a plot of the mean squared error loss as a function of the employed training epochs for the parallel exponential case and the parallel linear case,

Fig. 9     shows a plot of the mean squared error loss as a function of the employed training epochs for the sequential exponential case and the sequential linear case,

Fig. 10    shows a plot of the ground truth of a top-hat function as well as approximation functions in the parallel exponential case and the parallel linear case,

Fig. 11    shows a plot of the ground truth of a top-hat function as well as approximation functions in the sequential exponential case and the sequential linear case,

Fig. 12    shows a plot of the ground truth of the top-hat function as well as approximation functions using a simulation and a hardware implementation,

Fig. 13    shows a graphical representation of Fourier decompositions underlying different approximation functions,

Fig. 14    shows a plot of the mean squared error loss as a function of the employed training epochs for the parallel exponential case and the parallel linear case for three qubits,

Fig. 15    shows a plot of the mean squared error loss as a function of the employed training epochs for the sequential exponential case and the sequential linear case for three qubits,

Fig. 16    shows a plot of the ground truth of a top-hat function as well as approximation functions in the parallel exponential case and the parallel linear case for three qubits, and

Fig. 17    shows a plot of the ground truth of a top-hat function as well as approximation functions in the sequential exponential case and the sequential linear case for three qubits.

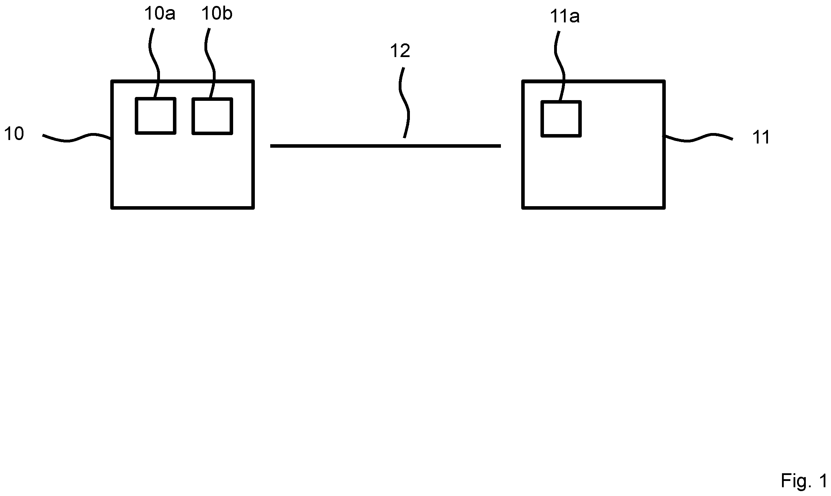

In Fig. 1, a graphical representation of a system for encoding a dataset in a quantum circuit for quantum machine learning is shown. The system comprises a (classical) data processing device 10, such as a server device, a computer, or the like. The data processing device 10 may comprise a (classical) processor 10a such as a CPU and a (classical) memory unit 10b.

The system further comprises a quantum processing unit (QPU) / quantum processing device 11 with a quantum circuit 11a. Exemplary embodiments of a QPU include the *IonQ Harmony*® QPU (cf. K. Wright et al., Nature Comm. 10, 11 (2019)). The quantum circuit may for example comprise a plurality of trapped ions, e.g., a chain of trapped ions.

Quantum bits (qubits) may be provided by energy levels (in particular, hyperfine / nuclear spin states or vibrational modes / phonons) of the trapped ions. Standard qubit operations and quantum gates such rotation quantum gates may be provided by appropriately applying electromagnetic fields (e.g., via laser pulses) on the trapped ions.

The employed quantum gates comprise single-qubit and two-qubit quantum gates that are based on two-photon Raman transitions. Raman transitions may be carried out by applying a pair of counter-propagating beams from a mode-locked pulsed 355 nm laser as follows. One of the beams is applied to all qubits globally and simultaneously, while the other beam is applied only to individual qubits. The latter beam passes through a multi-channel acousto-optic modulator (AOM) whose phase, frequency, and amplitude can simultaneously be modulated.

For single-qubit quantum gates, the difference of frequency between the two beams is set with respect to an input value to resonantly drive a spin-flip transition. Thus, the two quantum gates GPi($\phi$) and GPi2($\phi$) are provided, which respectively rotate the state of the qubit along a given longitudinal axis by angles $\pi$ and $\pi/2$. Further, a virtual Z quantum gate may be provided that results in a phase change in a qubit by advancing or retarding subsequent operations in the quantum circuit. These three operations together may allow to provide any rotation in the Bloch sphere.

For two-qubit quantum gates, XX-interactions are generated by motional sideband transitions which are driven off-resonantly (K. Wright et al., Nature Comm. 10, 11 (2019)) via the Mølmer and Sorensen approach (K. Mølmer and A. Sorensen, Phys. Rev. Lett., 82:1835-1838 (1999)). XX-interactions are simultaneous bit-flips on two qubits and can be applied via a phase to any 2-qubit trapped-ion system.

The system also comprises an interface 12 for communication between the data processing device 10 and the quantum processing device 11. For example, measurement values determined from the quantum circuit 11a may be transmitted (e.g., from a measurement device) to the data processing device 10. On the other hand, variational parameters or adjustment values thereof, which may also have been determined in the data processing device 10, may be transmitted to the quantum processing device 11 in order to appropriately adapt the quantum circuit 11a, in particular variational quantum gates, according to the variational parameters.

Measurement values may be determined by quantum measurements, which may, e.g., include measuring hyperfine state populations of the trapped ions. The quantum circuit is evaluated repeatedly (specified by a number of shots) and single-bit measurement values are measured. This way, the probability of obtaining specific quantum states may be determined.

Software packages for QPU control include, e.g., the PENNYLANE® library (Bergholm et al., arXiv:1811.04968 (2018). General quantum computing access may, e.g., be provided via *Amazon Web Services* (*AWS*) *Braket®*.

A QPU may for example be interfaced using AWS Bracket® and *IonQ Harmony®* as follows (alternative quantum hardware and platforms may also be employed). Using the data processing device 10, the dataset is provided to an AWS Bracket notebook. Subsequently, a quantum circuit template is created and sent to the AWS system, where the quantum circuit template may optionally be adapted and where the quantum circuit template is further transmitted to the *IonQ Harmony®* QPU. There, a (native) quantum circuit is created or adjusted within the *IonQ Harmony®* QPU from the quantum circuit template, wherein single-qubit and two-qubit quantum gates are implemented as described above. Subsequently, quantum operations to be carried out are set up and the quantum circuit is evaluated by a predetermined number of shots, and the resulting measurement values returned to AWS and therefrom transmitted to the data processing device 10. In the data processing device 10, expectation values can for example be determined from the measurement values as part of (classical) post-processing.

Overview of the method

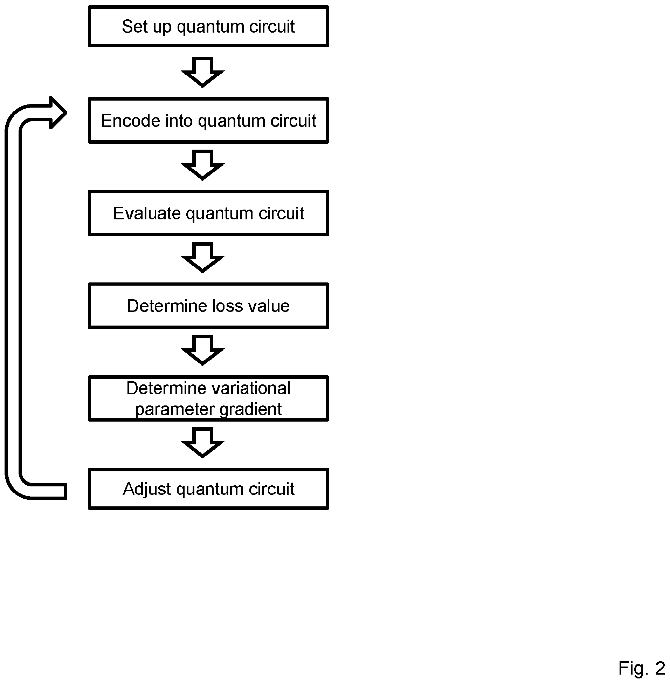

In Fig. 2, a graphical representation of training a quantum neural network is shown. In a first step, the quantum circuit 11a is set up and variational parameters of variational quantum gates of the quantum circuit 11a (randomly) initialized. The (input) dataset is divided into training samples.

In a second step, a (first) training sample of the dataset is provided and its features encoded in the quantum circuit 11a. In a third step, the quantum circuit 11a is evaluated and measurement values are determined.

In a fourth step, the measurement values, in particular expectation values, are compared with reference values. The reference values are determined from labels within for the training sample within the dataset. The comparison may be quantified by using a loss criterion, yielding a loss value. The second, the third and the fourth step may be repeated for all training samples in the dataset and a corresponding average loss value may be determined by averaging over the loss values from all training samples.

In a fifth step, the variational parameter gradient is determined from the (average) loss value using a quantum gradient calculation method such as the parameter-shift rule or the adjoint method.

In a sixth step, the variational parameters for the variational quantum gates of the quantum circuit 11a are adjusted based on the variational parameter gradient.

Steps 2 to 6 may be repeated until the loss value has reached a predetermined threshold, i.e., until the comparison between measurement values and reference values is satisfactory.

The quantum circuit 11a is thus optimized. Optimization may for example be carried out via stochastic gradient descent, in which a multiple of the gradient is added to the variational parameters, with the multiple being the learning rate of the model. Preferably, optimization is carried out using an Adam optimizer, which allows for a single epoch of training.

For determining the variational parameter gradient, a parameter-shift rule may be employed, i.e., for each variational parameter in the QNN, the quantum circuit 11a is evaluated two more times: once with the variational parameter incremented by $\pi/2$ and once with the variational parameter decremented by $\pi/2$. By subtracting the latter from the former and dividing the result by two, the derivative with respect to the respective variational parameter is determined. This procedure is repeated for all variational parameters to obtain a vector of derivatives, i.e., the variational parameter gradient. The variational parameter gradient represents the direction of the steepest function value increase. Hence, to decrease the loss value, a movement in the opposite direction is carried out. The quantum circuit 11a is thus optimized by moving the variational parameters by a small step (the learning rate) in the opposite direction of the variational parameter gradient.

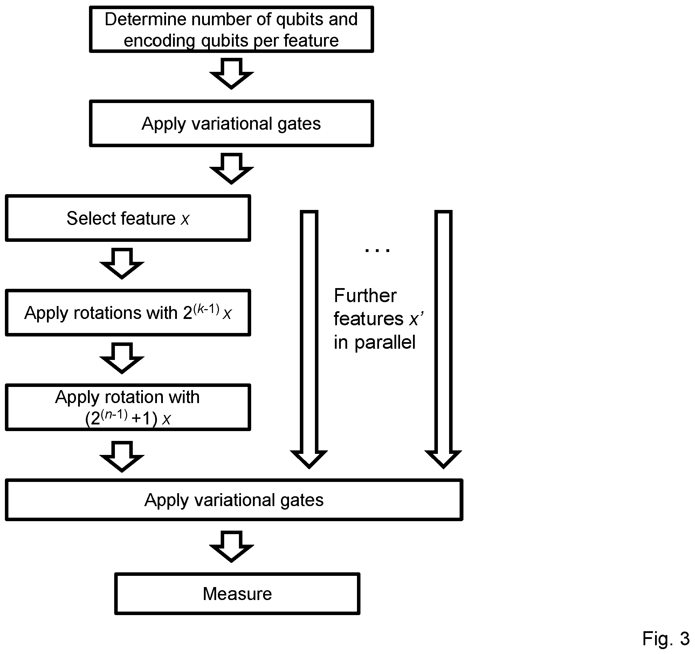

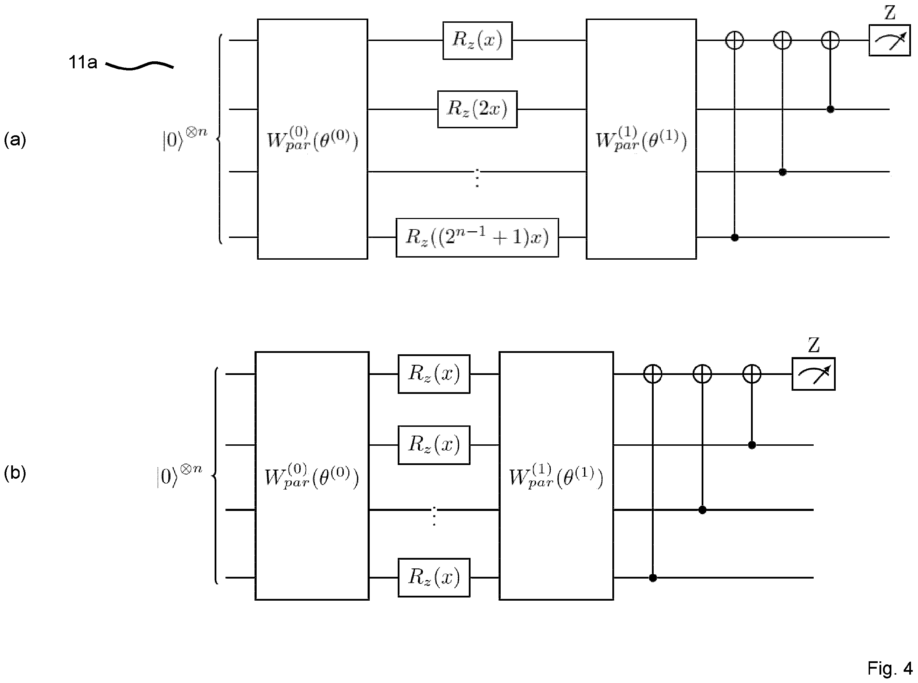

In Fig. 3, a graphical representation for encoding a dataset in a quantum circuit in a parallel arrangement of encoding quantum gates is shown, while Fig. 4a shows a graphical representation of the corresponding quantum circuit 11a. For brevity, the quantum circuit 11a for a single feature x is shown.

The number of qubits of the quantum circuit 11a is determined as a multiple $n$ of the number of features m of the dataset. The multiple $n$ corresponds to the number of repeated encoding qubits per feature x. To all qubits, which may each initially be initially prepared as $|0\rangle$, resulting in $|0\rangle^{\otimes n \cdot m}$ $(=|0\rangle^{\otimes n}$ for a single feature x), an initial variational layer $W_{\mathrm{par}}^{(0)}(\theta^{(0)})$ comprising initial variational quantum gates and initial variational parameters $\theta^{(0)}$ is applied. The first feature x is then selected and normalized and a first encoding quantum gate $R_z(x) = \exp(-i/2 \cdot x \cdot \sigma_z)$ (with Pauli-z-matrix $\sigma_z$ and $\hbar$ set to 1 for brevity) is applied to the first qubit, resulting in a rotation of the first qubit by $2^0 x = x$ around the (Pauli-) z-axis. The encoding quantum gate $R_z$ thus corresponds to a Pauli-Z-gate. Alternatively, rotation around the Pauli-x-axis (corresponding to Pauli-X-gate $R_x$), around the Pauli-y-axis (corresponding to Pauli-Y-gate $R_y$), or around an axis different from (Pauli-) x, y, or z may be provided.

Normalizing a feature x may comprise determining a smallest feature $x_{\min}$ and a largest feature $x_{\max}$ from the dataset. Normalizing the feature x may further comprise scaling the feature x as $(x - x_{\min})/(x_{\max} - x_{\min}) * 2\pi$. Alternative methods of normalizing may be provided.

The second qubit is rotated by $2^1 x$, the third qubit by $2^2 x$, the fourth qubit by $2^3 x$, and the subsequent qubits $k$ correspondingly by $2^{k-1} x$ until the (n-1)-th qubit, which is rotated by $2^{(n-2)} x$. Thus, rotations by $2^{(k-1)} x$ with scaling factors $2^{(k-1)}$ are applied in parallel for $k = 1, ..., n - 1$. The final, n-th qubit is encoded as / rotated by $(2^{n-1} + 1)x$ with scaling factor $(2^{n-1} + 1)$, i.e., the coefficient of the rotation of the final qubit is exclusively incremented by one compared to the other qubits.

The further qubits x' of the dataset are encoded / rotated correspondingly by $2^{k-1} x'$ for $k = 1, ..., n - 1$ and by $(2^{n-1} + 1) x$ for $k = n$ in quantum (sub-)circuits which are each parallel to the quantum (sub-)circuit for feature x (not shown in Fig. 4).

Subsequently, a final variational layer $W_{\mathrm{par}}^{(1)}(\theta^{(1)})$ comprising final variational quantum gates and final variational parameters $\theta^{(1)}$ is applied and quantum measurements for the qubits are carried out (e.g., in the Pauli-z-basis), resulting in corresponding measurement values. In addition, controlled NOT (CNOT) quantum gates (indicated in Fig. 4 by the symbols $\oplus$ and $\cdot$) may be applied in order to ensure that all qubits are cooperating in the training by propagating a $\pi$-measurement through all quantum wires. $\pi$-measurements arise from the fact that the first qubit (the uppermost qubit in Fig. 4a) is measured in the Pauli-z-basis, which is effectively a Pauli-z-rotation of the value $\pi$. By applying CNOT gates controlled by all the non-measurement qubits which control the measured qubit, the Pauli-z-rotation of $\pi$ is propagated to the remaining qubits ($\pi$-copy rule).

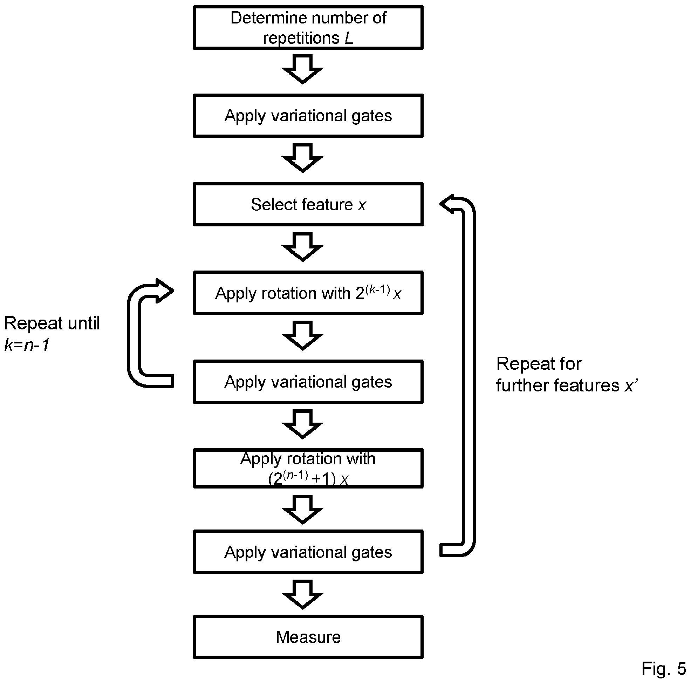

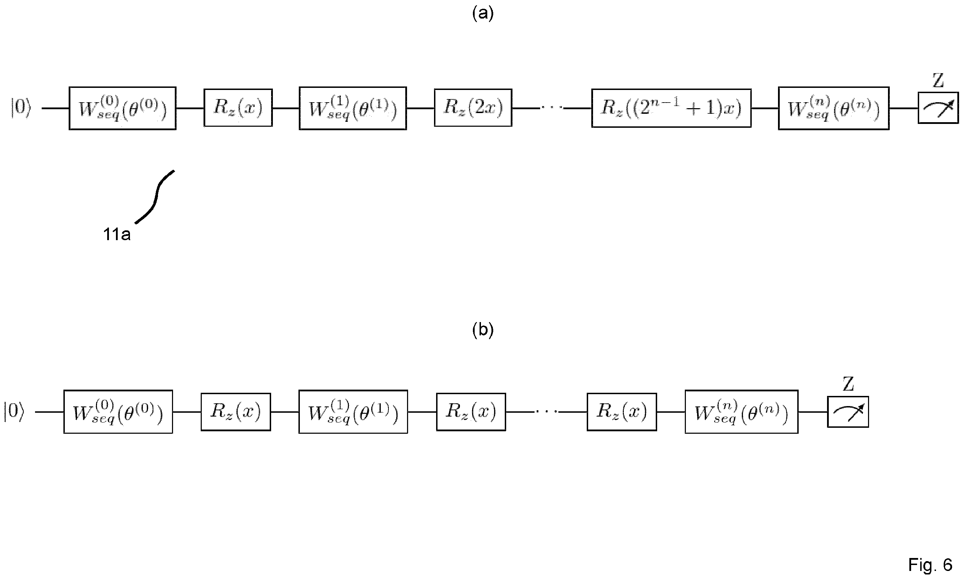

In Fig. 5, a graphical representation for encoding a dataset in a quantum circuit in a sequential arrangement of encoding quantum gates is shown, while Fig. 6a shows a graphical representation of the corresponding quantum circuit 11a. For brevity, the quantum circuit 11a for a single feature x is shown.

First, the number of repetitions $n$ to be included for each feature x of the dataset is determined. Further, an initial variational layer $W_{\mathrm{seq}}^{(0)}(\theta^{(0)})$ comprising initial variational parameters variational layer $\theta^{(0)}$ is applied on the (single) qubit prepared as $|0\rangle$. The first feature x is selected, normalized, and used to rotate the qubit in one of the three Pauli bases (or another axis) by this amount, i.e., by an angle of $2^0 \cdot x$. Subsequently, a first variational layer $W_{\mathrm{seq}}^{(1)}(\theta^{(1)})$

is applied on the qubit, after which a Pauli rotation by $2x$, a second variational layer $W_{\text{seq}}^{(2)}(\theta^{(2)})$, and another Pauli rotation by $4x$ is applied. This is continued until the $(n\text{-}1)$-th repetition, resulting in a rotation by $2^{(n\text{-}2)}x$. Thus, rotations by $2^{(k\text{-}1)}x$ with scaling factors $2^{(k\text{-}1)}$ are applied sequentially for $k = 1, ..., n - 1$.

The final, n-th encoding $k = n$ corresponds to a Pauli rotation by $(2^{n\text{-}1} + 1)\,x$ with scaling factor $(2^{n\text{-}1} + 1)$, so that the coefficient of this rotation exclusively is incremented by one compared to the preceding repetitions. The same procedure is repeated for the remaining features $x'$. A final variational layer $W_{\text{seq}}^{(n)}(\theta^{(n)})$ is applied and subsequently, measurement values are determined. Such a sequence of quantum gates provides an exponentially growing encoding space and removes the degrees of inefficiency which arise without the above scaling with powers of two (incremented by one).

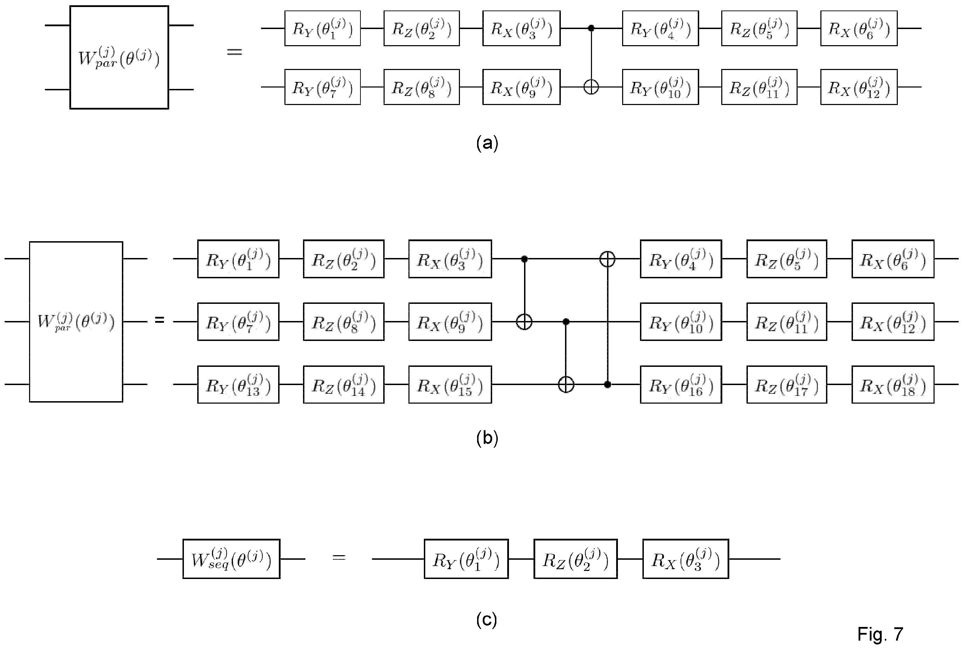

In Figs. 7a and 7b, a graphical representation of an exemplary variational layer $W_{\text{par}}^{(j)}(\theta^{(j)})$ in a parallel arrangement for two qubits and, respectively, for three qubits is shown. In Fig. 7c, a graphical representation of an exemplary variational layer $W_{\text{seq}}^{(j)}(\theta^{(j)})$ in a sequential arrangement for two qubits is shown. The variational layers $W_{\text{par}}^{(j)}(\theta^{(j)})$ and $W_{\text{seq}}^{(j)}(\theta^{(j)})$ each comprise a plurality of Pauli gates $R_X, R_Y, R_Z$ as variational quantum gates, wherein each variational quantum gate is determined by a corresponding variational parameter $\theta_i^{(j)}$.

<u>Comparison with quantum circuit without the employed scaling</u>

In the following, the quantum circuit according to the invention is compared with quantum circuits without the employed scaling factors $\{2^0, 2^1, ... 2^{n\text{-}2}, 2^{n\text{-}1} + 1\}$. Figs. 4b and 6b show graphical representations of further quantum circuits with a parallel and, respectively, sequential arrangement of the encoding quantum gates. No scaling of the features x in the encoding quantum gates is carried out in the further quantum circuits shown in Figs. 4b and 6b.

By merely encoding the features $x$ *without* scaling by powers of two, the same SU(2) encoding quantum gates (e.g., with generator $G_0 = \frac{1}{2}\begin{pmatrix} 1 & 0 \\ 0 & -1 \end{pmatrix}$) are used (sequentially or in parallel) to create more encoding layers. The eigenvalues of $G_0$ then correspond to a set of numbers $\frac{1}{2}\{1, -1\}$, which, when subtracted from each other, yield the set $\{-1,0,1\}$. Quantum gate repetitions (or parallelization) have an additive effect such that for $n$ repetitions, the final set becomes $\{-n, -n + 1, ...,0,..., n - 1, n\}$.

Each of the numbers of the set corresponds to a wavenumber from which a sinusoidal term $c_k(\theta_k)e^{ikx}$ with the same frequency may be determined. Therefore, $n$ repetitions of the encoding operator $S(x) = \exp(-iGx)$ yield $n$ distinct Fourier bases. The resulting function of the quantum circuit 11a (parallel or sequential) has the form

$$f(x, \{\theta_k\}) = \sum_{k=-n}^{n} c_k(\theta_k)e^{ikx},$$

wherein coefficient $c_k \in \mathbb{C}, c_k^* = c_k$, $k$ corresponds to a wavenumber, and $\theta_k$ denotes the corresponding variational parameter. Hence, the variational layers may be trained to tune the Fourier variables of the resulting function and thus provide a Fourier approximation $f(x)$ with $n$ Fourier basis elements for the features x and labels $y$ of the input dataset.

The (total) generator in the parallel case without additional scaling of x becomes $G = 1/2 \sum_{q=1}^{r} \sigma_z^{(q)}$, with qubit index q, total number of qubits $r$ and Pauli-z-matrices $\sigma_z^{(q)}$. The generator G has $2r + 1$ unique eigenvalues, suggesting a high degree of degeneracy in its eigen-spectrum.

In contrast, by including the scaling factors $\{2^0, 2^1, ... 2^{n\text{-}2}, 2^{n\text{-}1} + 1\}$ in the quantum circuit 11a, an exponentially larger number of Fourier bases can be provided for a given number of quantum gate repetitions or parallel encoding quantum gates. This is achieved by modifying the general SU(2) encoding quantum gates, which result in the generator $G$, towards larger special unitary generators.

In particular, the degeneracy of G can be reduced adding new wavenumbers to the set $\{-n, -n + 1, \dots ,0,\dots, n - 1, n\}$. To this end, the generator is modified within different layers. Without scaling, the diagonal elements of the generator $G_0$ are $\{-1/2, +1/2\}$. However, by introducing the scaling factors as explained above, the resulting function becomes

$$f(x,\{\theta_k\}) = \left( W_{1,j_1}^{(0)\dagger}\left(\theta^{(0)}\right) W_{j_1,j_2}^{(1)\dagger}\left(\theta^{(1)}\right) \cdots W_{i_2,i_1}^{(1)}\left(\theta^{(1)}\right) W_{i_1,1}^{(0)}\left(\theta^{(0)}\right)\right) e^{\left(\left(\lambda_{j_1}^{(1)}+\lambda_{j_2}^{(2)}+\cdots\right)-\left(\lambda_{i_1}^{(1)}+\lambda_{i_2}^{(2)}+\cdots\right)\right)x},$$

wherein $\lambda_i^{(l)} = a_l \lambda_i = \frac{1}{2}\{-a_l, a_l\}$ for $a_l \in \mathbb{N}$, as opposed to $a_l = 1$ for any $l$ in the case without scaling. In the proposed method, $a_l = \{2^0, 2^1, \dots 2^{n-2}, 2^{n-1} + 1\}$.

Using that the sum of the powers of two is $\sum_{i=0}^{n-1} 2^i = 2^n - 1$, the largest possible wavenumber $k_{max} = 2^n$ is obtained by taking all positive contributions $+a_l$ from the list of eigenvalues $\lambda_i^{(l)}$ such that $k_{max} = \sum_{i=1}^n a_l = \sum_{i=0}^{n-1} 2^i + 2^{n-1} + 1 = 2^n$. Subsequently, the signs of the positive values are switched to negative starting from the smallest term to produce all integers from $-2^n$ to $2^n$. Thus, the exponential number of $2^n$ Fourier frequencies and basis terms for $n$ quantum gates is provided.

The above can be illustrated via a two-qubit example, which can readily be extended to three and more qubits. Using two qubits with parallel encoding gates without scaling, the following generator arises:

$$G^{\mathrm{lin}} = \frac{1}{2}(\sigma_z \otimes \mathbb{1} + \mathbb{1} \otimes \sigma_z) = \begin{pmatrix} 1 & 0 & 0 & 0 \\ 0 & 0 & 0 & 0 \\ 0 & 0 & 0 & 0 \\ 0 & 0 & 0 & -1 \end{pmatrix}.$$

$G^{\mathrm{lin}}$ has 3 unique eigenvalues $\lambda \in \{-1,0,1\}$, and when subtracted from itself, wavenumbers $L_k^{\mathrm{lin}} = \{-2, -1, 0, 1, 2\}$ are obtained, corresponding to two Fourier bases with frequencies $\{1,2\}$. By introducing the above scaling, the following generator is obtained

$$G^{\exp} = \frac{1}{2}(3\sigma_z \otimes \mathbb{1} + \mathbb{1} \otimes \sigma_z) = \begin{pmatrix} 2 & 0 & 0 & 0 \\ 0 & -1 & 0 & 0 \\ 0 & 0 & 1 & 0 \\ 0 & 0 & 0 & -2 \end{pmatrix},$$

which comprises four unique eigenvalues that generate nine wavenumbers $\{-4, -3, -2, -1, 0, 1, 2, 3, 4\}$. In this case, an SU(4) generator that is decomposed into two SU(2) generators is employed, one SU(2) generator using the group parameter x, and the other SU(2) generator using the group parameter 3x.

For $n$ qubits, $G^{\exp}$ may correspond to a diagonal matrix with diagonal values from $-2^{n-1}$ to $2^{n-1}$, yielding $2^n$ Fourier bases. The scaling thus creates an uninterrupted Fourier spectrum from $-2^{n-1}$ to $2^{n-1}$. Hence, the size of the underlying Hilbert space may be used more efficiently, in particular for encoding exponentially-growing Fourier series.

The employed encoding may also be advantageous when passing quantum information from a quantum network (e.g., including the quantum circuit 11a) to another. In particular, the resulting quantum state from the quantum circuit 11a includes all corresponding Fourier terms and can be used to modify the Fourier terms as necessary for further processing and/or encode the Fourier terms in lower dimensional spaces. An example for such an encoding may be a quantum auto-encoder where information is encoded in a quantum circuit and some of the employed qubits are discarded so that the remaining qubits may be trained to maximize the information transfer rate.

Training results

In the following, the training performance of encoding the features x in the encoding quantum gates according to the invention (cf. Fig. 4a ("*Parallel Exponential*") and Fig. 6a (*"Sequential Exponential"*)) in comparison without such encoding (cf. Fig. 4b ("*Parallel Linear*") and Fig. 6b ("*Sequential Linear*")) is assessed via exemplary quantum circuits comprising two qubits in the parallel case and two repetitions in the sequential case. With the encoding according to the invention, the number of different (Fourier) bases scales exponentially instead of linearly with the number of employed qubits / repetitions.

The training was carried out on QMware® hardware using the PENNYLANE® Python package. An Adam optimizer was employed to minimize a mean squared error (MSE) loss function with a learning rate of $\epsilon$ = 0.1 and with uniformly-distributed parameters $\theta \in [0, 2\pi]$.

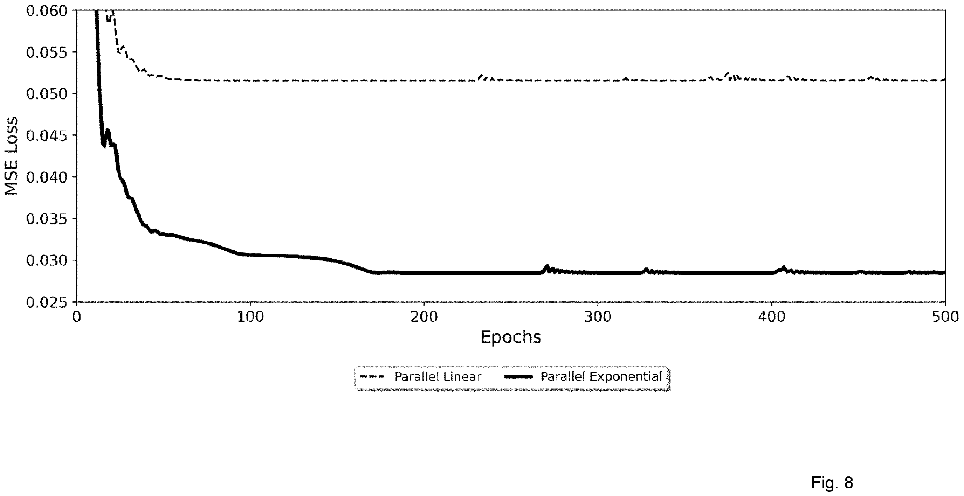

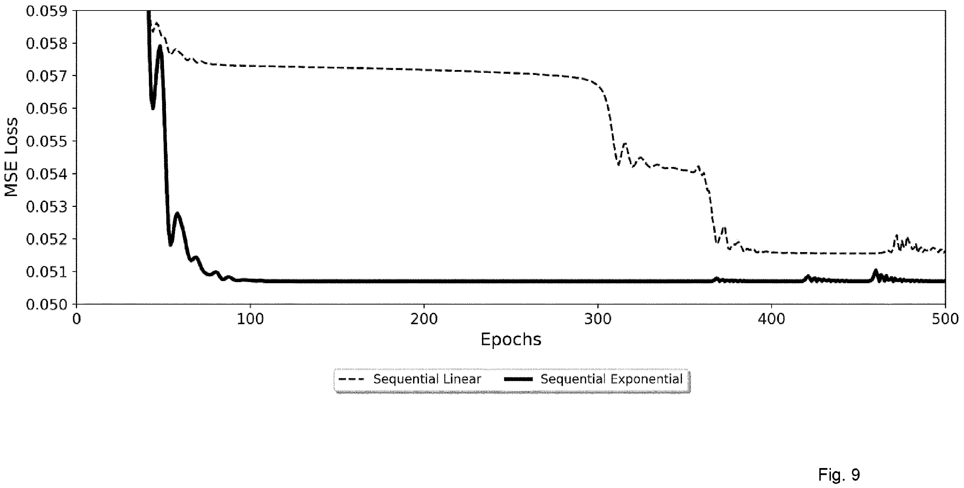

Each of the exemplary quantum circuits is trained to reproduce a one-dimensional top-hat function. Fig. 8 shows a plot of the mean squared error loss as a function of the employed training epochs for the parallel exponential case (with scaling) and the parallel linear case (without scaling). Fig. 9 shows a corresponding plot for the sequential exponential case and the sequential linear case.

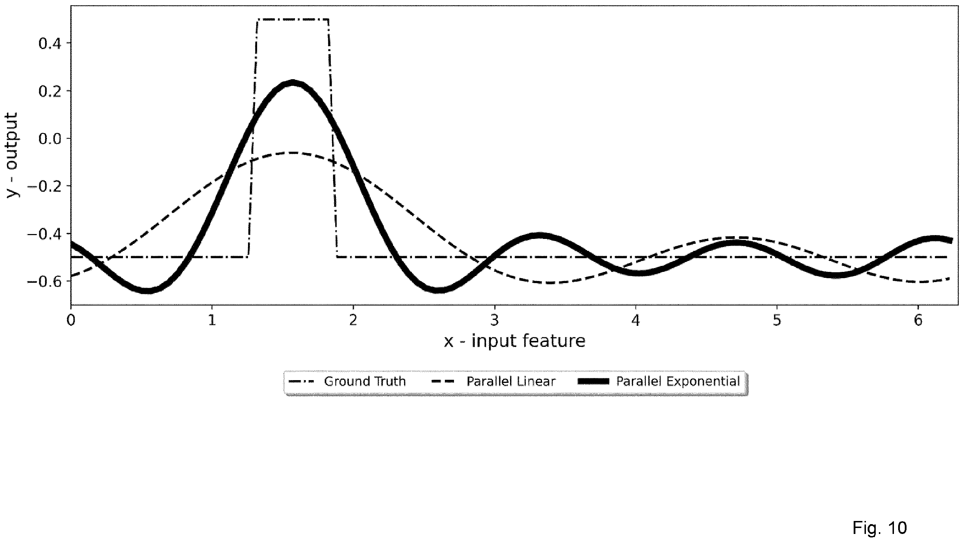

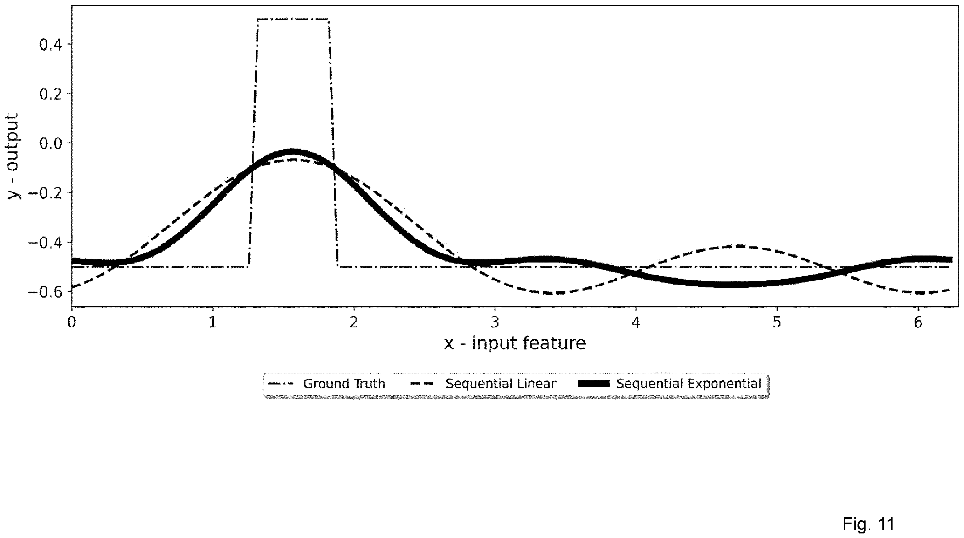

Fig. 10 shows a plot of the ground truth of the top-hat function as well as approximation functions in the parallel exponential case and the parallel linear case. Each ground truth function value corresponds to a label for an input feature. Fig. 11 shows a corresponding plot in the sequential exponential case and the sequential linear case.

The Figs. 8 to 11 illustrate a training advantage for the parallel exponential architecture and the sequential exponential architecture. The parallel exponential architecture provides the best fit and makes best use of the employed four Fourier frequencies. Both linear architectures perform similarly with respect to their accessibility to two representable Fourier frequencies.

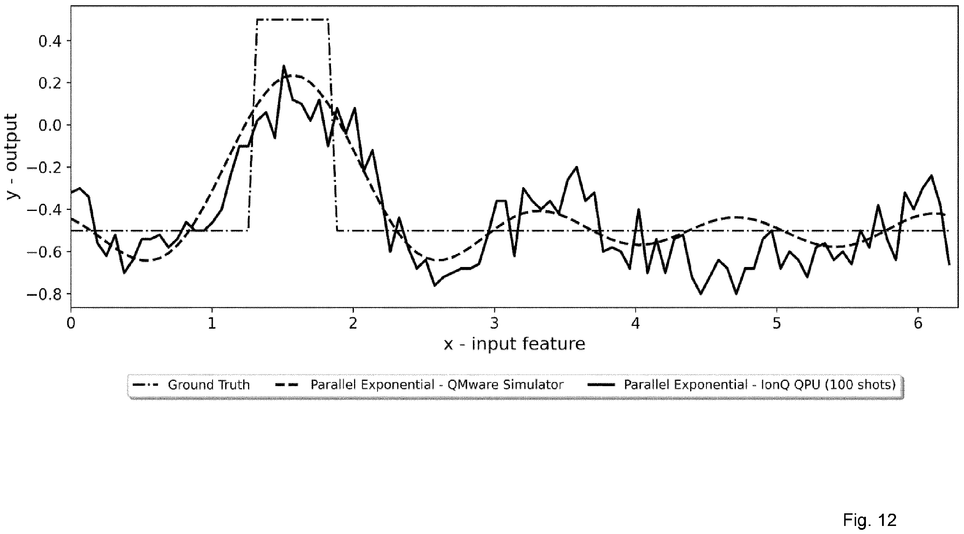

Fig. 12 shows a plot of the ground truth of the top-hat function as well as approximation functions in the parallel exponential case using a QMware® simulation and using a hardware implementation on the *IonQ Harmony*® trapped-ion quantum processing unit. The employed trapped-ion QPU comprises high-fidelity quantum gates which are implemented via laser pumping trapped ions (cf. Schindler et al., New J. Phys. 15:123012 (2013)). In particular, the hardware introduced in K. Wright et al., Nature Comm. 10, 11 (2019) was employed, comprising a single-qubit fidelity of 0.997 and a two-qubit fidelity of 0.9725. The code was implemented via *Amazon Web Services (AWS) Braket*®.

For the trapped ion fit, the quantum circuit 11a has been evaluated for 100 equally-spaced points (input features) using 100 shots each. The comparably low number of 100 shots represents the dominant source of noise. A higher number of shots is expected to yield a smoother curve that is closer to the QMware® simulation curve.

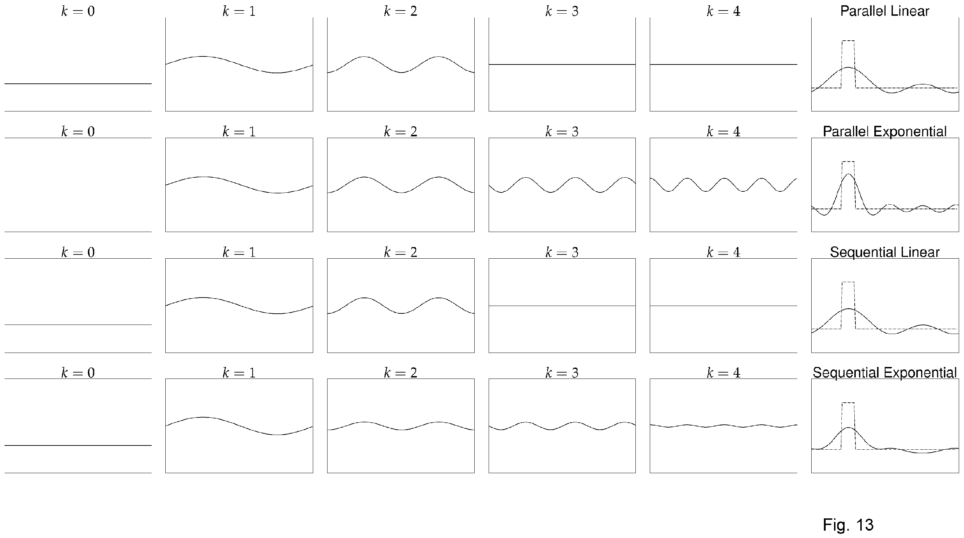

Fig. 13 shows a graphical representation of the Fourier decompositions underlying the approximation functions depicted in Figs. 10 and 11. The first row corresponds to the parallel linear architecture, the second row to the parallel exponential architecture, the third row to the sequential linear, and the fourth row to the sequential exponential architecture. The last column shows plots of the respective approximation functions as well as the ground truth function.

The first five columns show plots of the basis functions $e^{ikx}$ and $e^{-ikx}$, which constitute the approximation functions $\sum_{k=-n}^{n} c_k(\theta_k) e^{ikx}$, multiplied with respectively determined coefficients $c_k(\theta_k)$. The linear architectures (rows 1 and 3) can only access two Fourier frequencies / wave numbers $k$, whereas the exponential architectures (rows 2 and 4) can access four.

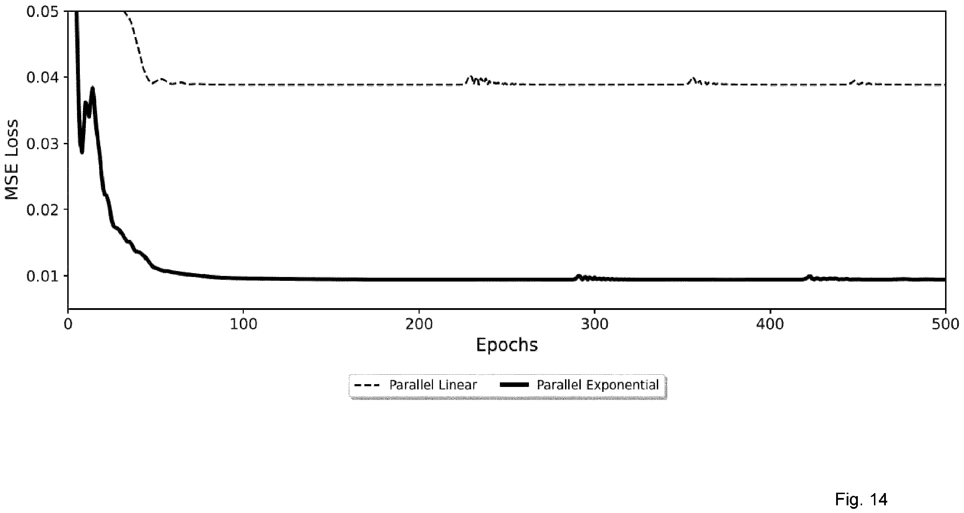

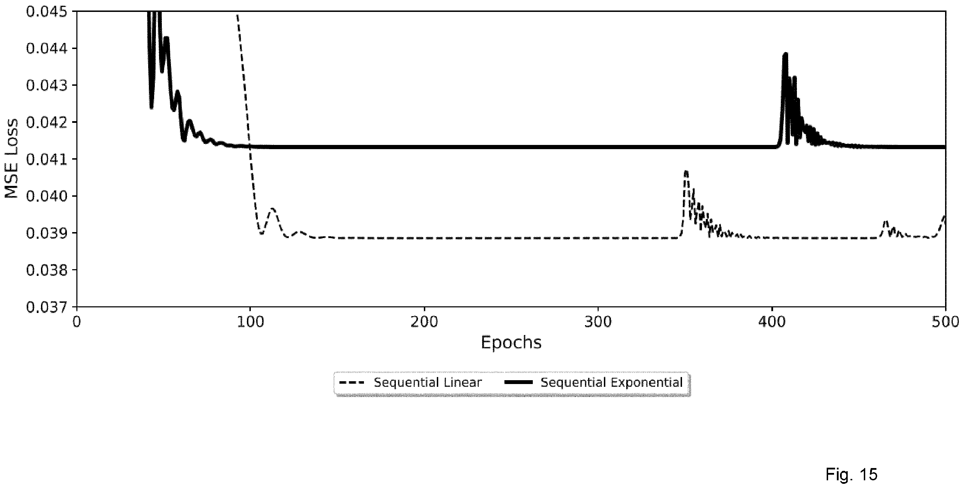

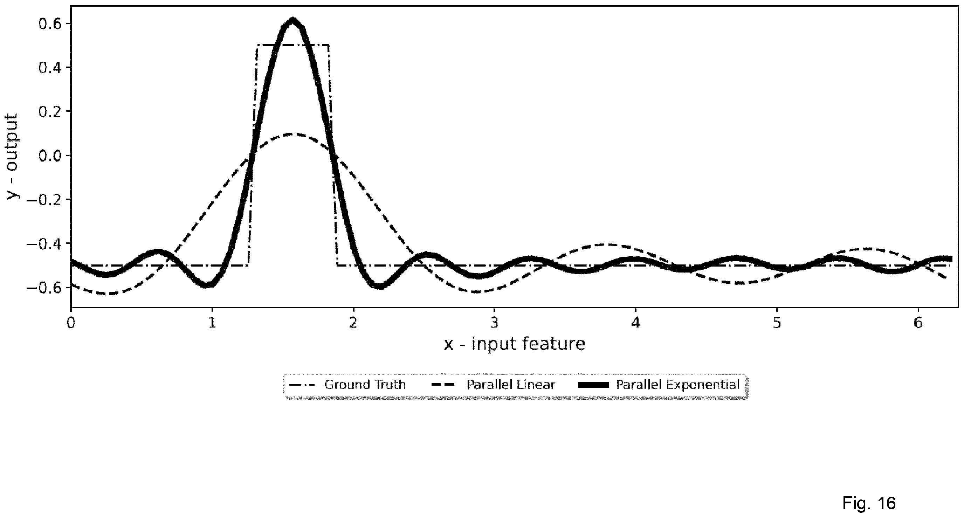

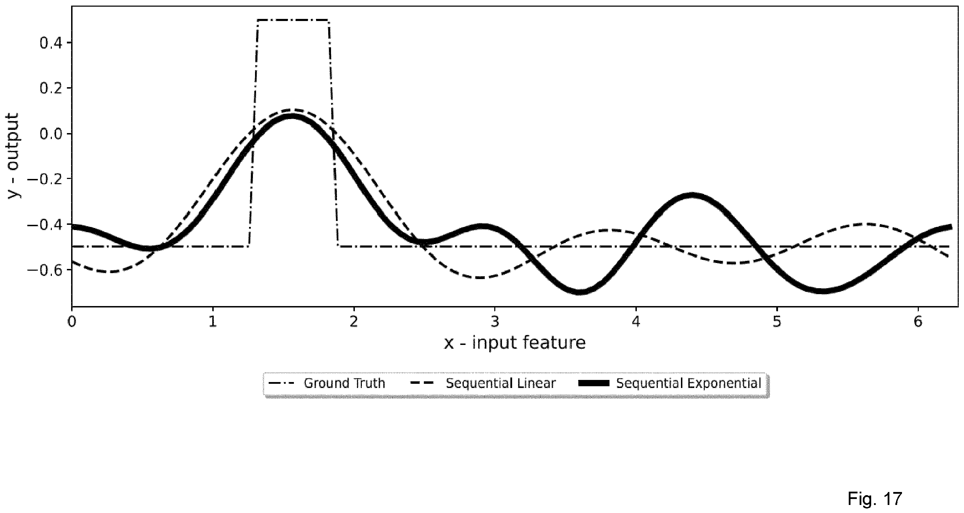

Figs. 14 to 17 show plots corresponding to Figs. 8 to 11 using three qubits. In particular, Figs. 14 and 15 show plots of the mean squared error loss as a function of the employed training epochs for the parallel/sequential exponential case and the parallel/sequential linear case. Figs. 16 and 17 show plots of the ground truth of the top-hat function as well as approximation functions in the parallel/sequential exponential case and the parallel/sequential linear case.

The features disclosed in this specification, the figures and/or the claims may be material for the realization of various embodiments, taken in isolation or in various combinations thereof.

**Claims**

1.  Method for encoding a dataset in a quantum circuit for quantum machine learning, in a system comprising a quantum circuit (11a) comprising a plurality of encoding quantum gates and a plurality of variational quantum gates, the method comprising:

    - providing a dataset comprising a plurality of input features;
    - for each input feature of the plurality of input features, applying the plurality of encoding quantum gates on one qubit or a plurality of qubits, wherein

- each of the plurality of encoding quantum gates rotates the one qubit or the plurality of qubits by a rotation angle which is proportional to the input feature and one of a plurality of scaling factors,
- each of the plurality of encoding quantum gates is assigned a different one of the plurality of scaling factors, and
- the plurality of scaling factors comprises powers of two;

- applying the plurality of variational quantum gates on the qubit or the plurality of qubits;
- determining a plurality of measurement values for the qubit or the plurality of qubits;
- adjusting the quantum circuit (11a) by adjusting the plurality of variational quantum gates using the plurality of measurement values; and
- determining output data for the dataset from the quantum circuit (11a).

2. Method according to claim 1, wherein each of the plurality input features is a real number and/or each of the plurality of scaling factors is a natural number.

3. Method according to claim 1 or 2, wherein the plurality of scaling factors additionally comprises a power of two incremented by one.

4. Method according to at least one of the preceding claims, wherein the plurality of encoding quantum gates is applied in parallel on the plurality of qubits, wherein preferably each of the plurality of encoding quantum gates is applied to a different one of the plurality of qubits.

5. Method according to at least one of claims 1 to 3, wherein the plurality of encoding quantum gates is applied sequentially on the one qubit.

6. Method according to claim 5, wherein between each two of the plurality of encoding quantum gates, at least one of the plurality of variational quantum gates is applied.

7. Method according to at least one of the preceding claims, wherein applying the plurality of variational quantum gates comprises applying an initial variational quantum gate on the one qubit or the plurality of qubits prior to applying the plurality of encoding quantum gates and/or applying a final variational quantum gate subsequent to applying the plurality of encoding quantum gates.

8. Method according to at least one of the preceding claims, wherein the plurality of variational quantum gates are determined by a plurality of variational parameters, the method further comprising optimizing the variational parameters by iteratively applying the plurality of encoding quantum gates and the plurality of variational quantum gates on the one qubit or the plurality of qubits, determining the plurality of measurement values, and adjusting the quantum circuit (11a) until an optimization criterion is reached.

9. Method according to claim 8, wherein the plurality of variational parameters comprises a plurality of variational rotation angles, preferably by which the one qubit or the plurality of qubits are rotatable.

10. Method according to at least one of the preceding claims, wherein the plurality of variational quantum gates comprises at least one of a Pauli-X-gate, a Pauli-Y-gate, a Pauli-Z-gate, a Hadamard gate, and a CNOT gate.

11. Method according to at least one of the preceding claims, further comprising determining a loss value from the plurality of measurement values and reference values by applying a loss function.

12. Method according to claim 11, further comprising determining a variational parameter gradient from the loss value, wherein adjusting the plurality of variational quantum gates comprises adjusting the plurality of variational quantum gates based on the variational parameter gradient.

13. Method according to at least one of the preceding claims, wherein determining the output data for the data set comprises determining a basis decomposition for the dataset.

14. Method according to at least one of the preceding claims, wherein the one qubit or the plurality of qubit are provided by energy levels of trapped ions.

**15.** System for encoding a dataset in a quantum circuit for quantum machine learning, the system comprising a quantum circuit (11a) comprising a plurality of encoding quantum gates and a plurality of variational quantum gates and configured to:

- provide a dataset comprising a plurality of input features;
- for each input feature of the plurality of input features, apply the plurality of encoding quantum gates on one qubit or a plurality of qubits, wherein

- each of the plurality of encoding quantum gates rotates the one qubit or the plurality of qubits by a rotation angle which is proportional to the input feature and one of a plurality of scaling factors,
- each of the plurality of encoding quantum gates is assigned a different one of the plurality of scaling factors, and
- the plurality of scaling factors comprises powers of two;

- apply the plurality of variational quantum gates on the qubit or the plurality of qubits;
- determine a plurality of measurement values for the qubit or the plurality of qubits;
- adjust the quantum circuit (11a) by adjusting the plurality of variational quantum gates using the plurality of measurement values; and
- determine output data for the dataset from the quantum circuit (11a).

Fig. 1

Fig. 2

```
        ┌─────────────────────────────┐
        │  Determine number of qubits and │
        │  encoding qubits per feature    │
        └─────────────────────────────┘
                      ⇓
        ┌─────────────────────────────┐
        │   Apply variational gates       │
        └─────────────────────────────┘
                      ⇓
   ┌──────────────────────┐
   │    Select feature x    │
   └──────────────────────┘
             ⇓
   ┌──────────────────────┐              ⇧       . . .      ⇧
   │ Apply rotations with $2^{(k-1)}x$ │              │                 │
   └──────────────────────┘           Further
             ⇓                        features x'
   ┌──────────────────────┐           in parallel
   │   Apply rotation with  │
   │    $(2^{(n-1)}+1)\,x$    │
   └──────────────────────┘              │                 │
             ⇓                           ⇩                 ⇩
   ┌──────────────────────────────────────────────────┐
   │              Apply variational gates                  │
   └──────────────────────────────────────────────────┘
                      ⇓
        ┌─────────────────────────────┐
        │          Measure                │
        └─────────────────────────────┘
```

Fig. 3

EP 4 369 260 A1

(a)

$|0\rangle^{\otimes n}$

$W_{par}^{(0)}(\theta^{(0)})$

$R_z(x)$

$R_z(2x)$

$R_z((2^{n-1}+1)x)$

$W_{par}^{(1)}(\theta^{(1)})$

Z

(b)

$|0\rangle^{\otimes n}$

$W_{par}^{(0)}(\theta^{(0)})$

$R_z(x)$

$R_z(x)$

$R_z(x)$

$W_{par}^{(1)}(\theta^{(1)})$

Z

Fig. 4

```
                    ┌──────────────────────┐
                    │  Determine number of │
                    │    repetitions L     │
                    └──────────────────────┘
                               ⇩
                    ┌──────────────────────┐
                    │ Apply variational gates │
                    └──────────────────────┘
                               ⇩
                    ┌──────────────────────┐
                    │    Select feature x   │  ◄─┐
                    └──────────────────────┘    │
                               ⇩                │
  ┌─►              ┌──────────────────────┐     │
  │                │ Apply rotation with 2^(k-1) x │   │
  │                └──────────────────────┘     │
Repeat until                ⇩                   │
k=n-1     ◄─┐       ┌──────────────────────┐     │
           └──────│ Apply variational gates │    │
                    └──────────────────────┘     │  Repeat for
                               ⇩                 │  further features x'
                    ┌──────────────────────┐     │
                    │   Apply rotation with │     │
                    │    (2^(n-1)+1) x      │     │
                    └──────────────────────┘     │
                               ⇩                 │
                    ┌──────────────────────┐     │
                    │ Apply variational gates │◄──┘
                    └──────────────────────┘
                               ⇩
                    ┌──────────────────────┐
                    │       Measure        │
                    └──────────────────────┘
```

Determine number of repetitions $L$

Apply variational gates

Select feature $x$

Apply rotation with $2^{(k-1)}x$

Repeat until $k=n-1$

Apply variational gates

Apply rotation with $(2^{(n-1)}+1)x$

Repeat for further features $x'$

Apply variational gates

Measure

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Europäisches
Patentamt

European
Patent Office

Office européen
des brevets

# EUROPEAN SEARCH REPORT

Application Number

EP 22 20 6727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SOFIENE JERBI ET AL: "Variational quantum policies for reinforcement learning", ARXIV.ORG, CORNELL UNIVERSITY LIBRARY, 201 OLIN LIBRARY CORNELL UNIVERSITY ITHACA, NY 14853, 9 March 2021 (2021-03-09), XP081908385, * abstract * * Introduction * * sections III, IV, VI * * figures 1, 2 * ----- | 1-15 | INV. G06N10/20 G06N10/40 G06N10/60 G06N3/09 |
| X | TAK HUR ET AL: "Quantum convolutional neural network for classical data classification", ARXIV.ORG, CORNELL UNIVERSITY LIBRARY, 201 OLIN LIBRARY CORNELL UNIVERSITY ITHACA, NY 14853, 11 February 2022 (2022-02-11), XP091155910, DOI: 10.1007/S42484-021-00061-X * abstract * * sections II-IV * * figures 1, 2 * ----- | 1-15 | |

TECHNICAL FIELDS SEARCHED (IPC)

G06N

The present search report has been drawn up for all claims

| Place of search | Date of completion of the search | Examiner |
|---|---|---|
| The Hague | 3 March 2023 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. ABBAS et al.** *The power of quantum neural networks,* 2020
- **M. SCHULD et al.** *Phys. Rev. A,* 2021, vol. 103 (3), 032430
- **A. PEREZ-SALINAS et al.** *Quantum,* 2020, vol. 4, 226
- **S. LLOYD et al.** *arXiv:2001.03622,* 2020
- **JERBI et al.** *arXiv:2103.05577,* 2021
- **SHIN et al.** *arXiv:2206.12105,* 2022
- **K. WRIGHT et al.** *Nature Comm.,* 2019, vol. 10, 11
- **K. MØLMER ; A. SORENSEN.** *Phys. Rev. Lett.,* 1999, vol. 82, 1835-1838
- **BERGHOLM et al.** *arXiv:1811.04968,* 2018